# EUROPÄISCHE PATENTSCHRIFT

(11) **EP 2 974 894 B1**
(45) Veröffentlichungstag und Bekanntmachung des Hinweises auf die Patenterteilung: **13.12.2017**
(21) Anmeldenummer: 14176914.1
(22) Anmeldetag: 14.07.2014
(51) Int. Cl.: B60H 1/00, B60H 1/32

(54) **Verfahren zum Betrieb einer Klimaanlage eines Kraftfahrzeugs**
Method for operating an air-conditioning system of a motor vehicle
Procédé de fonctionnement d'une climatisation d'un véhicule automobile

(43) Veröffentlichungstag der Anmeldung: 20.01.2016
(73) Patentinhaber: Weidplas GmbH, 8700 Küsnacht (CH)
(72) Erfinder: Harke, Stefan, 74889 Sinsheim (DE); Müller, Armin, 8722 Kaltbrunn (CH); Dal Vecchio, Piero, 8734 Ermenswil (CH); Bölsterli, Christian, 8635 Dürnten (CH)
(74) Vertreter: Rutz, Andrea

(56) Entgegenhaltungen:
- EP-A1- 2 752 318
- DE-A1- 10 226 758
- DE-A1- 10 247 083
- DE-A1-102004 051 912

## Beschreibung

### TECHNISCHES GEBIET

Die vorliegende Erfindung betrifft ein Verfahren zum Betrieb einer Klimaanlage eines Kraftfahrzeugs sowie ein Kraftfahrzeug mit einer Klimaanlage, welche für einen derartigen Betrieb ausgelegt ist.

### STAND DER TECHNIK

Zur Regulierung der im Fahrgastraum herrschenden Temperatur weisen Klimaanlagen von Kraftfahrzeugen üblicherweise einen Kühlkreislauf mit einem Verdampfer auf, mittels welchem in den Fahrgastraum einströmende Luft gekühlt wird. Die Kühlung bedingt bekanntlich einen gewissen Energieaufwand, welcher zur Verminderung des Kraftstoffverbrauchs bzw. zum Erreichen einer möglichst hohen Reichweite bei Elektro- und Hybridfahrzeugen minimiert werden soll.

In der DE 102 47 083 wird eine Klimaanlage gemäß Oberbegriff der Ansprüche 1 und 13 vorgeschlagen, bei welcher via separate Luftkanäle einerseits Frischluft von aussen her einem ersten Verdampfer und andererseits Umluft vom Fahrzeuginnern her einem zweiten Verdampfer zuführbar ist. Bei dieser Klimaanlage ist mittels separaten, in den jeweiligen Luftkanälen vorgesehenen Luftfördermitteln das Mengenverhältnis von gekühlter Frischluft zu gekühlter Umluft beliebig einstellbar. Indem einer der Verdampfer ein Kältespeichermedium enthält, kann die Kühlung auch bei einem kurzzeitigen Abschalten des Motors ohne allzu grossen Energieverbrauch aufrechterhalten werden. Die zu kühlende Luft wird dann entsprechend hauptsächlich zum Verdampfer mit dem Kältespeichermedium geleitet.

Bei der Kühlung entsteht in Klimaanlagen insbesondere bei verhältnismässig hohen Kühlleistungen oft Kondenswasser, welches am Verdampfer abgeschieden wird. Das dadurch entstehende feuchte Klima im Bereich des Verdampfers begünstigt das Bakterienwachstum und kann dadurch zu einer entsprechenden, unerwünschten Geruchsbildung führen. Um dieser Geruchsbildung entgegenzuwirken, werden Klimaanlagen stets derart betrieben, dass die am Verdampfer vorbeiströmende Luft auf eine Temperatur von weniger als 10°C abgekühlt wird. Bei einer derart tiefen Temperatur ist das Bakterienwachstum bekanntermassen erheblich reduziert, allerdings auf Kosten des Energieverbrauchs.

### DARSTELLUNG DER ERFINDUNG

Es ist also eine Aufgabe der vorliegenden Erfindung, den Energieverbrauch einer möglichst geruchsfreien Klimaanlage in einem Kraftfahrzeug zu senken. Zur Lösung dieser Aufgabe wird ein Verfahren vorgeschlagen, wie es in Anspruch 1 angegeben ist. Außerdem wird in Anspruch 13 ein Kraftfahrzeug mit einer Klimaanlage angegeben, welche zur Durchführung dieses Verfahrens ausgelegt ist. Vorteilhafte Ausgestaltungen der Erfindung sind in den abhängigen Ansprüchen angegeben.

Die vorliegende Erfindung gibt also ein Verfahren zum Betrieb einer Klimaanlage eines Kraftfahrzeugs an, welches zumindest die folgenden Verfahrensschritte aufweist:
- Frischluft von ausserhalb des Kraftfahrzeugs wird einem ersten Verdampfer zugeführt und vom ersten Verdampfer auf eine erste Temperatur abgekühlt, welche weniger als 10°C beträgt;
- Umluft aus einem Fahrgastraum des Kraftfahrzeugs wird einem zweiten Verdampfer zugeführt und vom zweiten Verdampfer auf eine zweite Temperatur abgekühlt;
- die vom ersten Verdampfer abgekühlte Frischluft und die vom zweiten Verdampfer abgekühlte Umluft werden in den Fahrgastraum geleitet.

Dabei wird der zweite Verdampfer derart betrieben, dass die zweite Temperatur höher liegt als die erste Temperatur, und dass die Kühlung der Umluft im Wesentlichen, bevorzugt vollständig, kondensationsfrei stattfindet. Bevorzugt wird der zweite Verdampfer derart betrieben, dass die zweite Temperatur zumindest 10°C beträgt.

Im ersten Verdampfer wird die von ausserhalb des Kraftfahrzeugs einströmende Frischluft also wie in herkömmlichen Klimaanlagen auf weniger als 10°C abgekühlt. Auf diese Weise wird ein Bakterienwachstum im ersten Verdampfer verhindert. Im Gegensatz dazu wird der zweite Verdampfer mit einer in der Regel deutlich geringeren Kühlleistung betrieben. Da die Kühlung dabei aber im Wesentlichen kondensationsfrei stattfindet, kann sich im Bereich des zweiten Verdampfers kein Wasser ansammeln, so dass auch dort ein Bakterienwachstum mit entsprechender Geruchsbildung verhindert wird. Da der zweite Verdampfer mit einer wesentlich geringeren Kühlleistung arbeitet, kann die Klimaanlage insgesamt sehr energieeffizient betrieben werden, wobei gleichzeitig eine Geruchsbildung vermieden wird.

Der Erfindung liegt insbesondere die Erkenntnis zugrunde, dass die dem zweiten Verdampfer zugeführte Umluft üblicherweise bereits verhältnismässig trocken ist und deshalb der zweite Verdampfer bei einer höheren Temperatur als der erste Verdampfer, insbesondere bei einer Temperatur von 10°C oder höher, betrieben werden kann, ohne dass dadurch ein Bakterienwachstum begünstigt wird. Die in den Fahrgastraum einströmende Luft kann dadurch mit verhältnismässig geringem Energieaufwand gekühlt werden und ist aufgrund ihres Frischluftanteils trotzdem sauerstoffreich.

Mit einer kondensationsfreien Kühlung ist gemeint, dass die relative Luftfeuchtigkeit der Umluft beim Abkühlen im zweiten Verdampfer unterhalb von 100% bleibt, d.h. dass der Kondensationspunkt nicht erreicht wird. Auf welche Minimaltemperatur die Umluft im Bereich des zweiten Verdampfers gerade noch kondensationsfrei abgekühlt werden kann, hängt insbesondere von der Temperatur und vom Feuchtigkeitsgehalt der zu kühlenden Umluft ab. Um eine kondensationsfreie Kühlung durch den zweiten Verdampfer zu garantieren, kann daher die Temperatur und/oder der Feuchtigkeitsgehalt der dem zweiten Verdampfer zugeführten Umluft z.B. mittels Sensoren gemessen und der zweite Verdampfer entsprechend geregelt werden. Die Kühlleistung des zweiten Verdampfers kann aber auch einfach derart eingestellt werden, dass die Umluft nur soweit abgekühlt wird, dass sie bei normalerweise im Fahrgastraum üblichen Werten der Temperatur und des Feuchtigkeitsgehalts, z.B. während einer längeren Fahrt des Kraftfahrzeugs, nicht kondensiert. Alternativ kann z.B. auch unmittelbar luftstromabwärts vom zweiten Verdampfer der Feuchtigkeitsgehalt der abgekühlten Umluft gemessen und die Kühlleistung des zweiten Verdampfers derart geregelt werden, dass der gemessene Feuchtigkeitsgehalt einen bestimmten Wert nicht überschreitet.

Vorzugsweise wird die Klimaanlage gemäss dem angegebenen Verfahren bei Aussentemperaturen von 25°C oder höher betrieben. Besonders bevorzugt wird die Klimaanlage im Sommer betrieben, wenn ausserhalb des Kraftfahrzeugs eine relative Luftfeuchtigkeit von ca. 50% bei einer Temperatur von ca. 30°C herrscht. In 1 kg Luft sind bei diesen Bedingungen ca. 14 g Wasser enthalten. Die Steuerung der Klimaanlage ist dann typischerweise derart ausgelegt, dass sich bei diesen Aussenbedingungen im Fahrgastraum eine relative Luftfeuchtigkeit von ca. 30 % bei einer Temperatur von ca. 24°C einstellt, d.h. in 1 kg Luft sind dann im Fahrgastraum ca. 6 g Wasser enthalten.

Der erste und der zweite Verdampfer sind in der Regel Teil eines Kühlkreislaufs mit Kondensator, Drossel und Kompressor. Die technische Ausgestaltung derartiger Kühlkreisläufe ist dem Fachmann hinlänglich bekannt. Der erste und der zweite Verdampfer können dabei Teil desselben Kühlkreislaufs sein. Flexibler steuerbar und deshalb bevorzugt ist jedoch eine Klimaanlage, bei welcher die beiden Verdampfer separaten Kühlkreisläufen angehören.

Da der zweite Verdampfer bei einer höheren Temperatur als der erste Verdampfer, insbesondere bei Temperaturen von 10°C oder höher, betrieben wird, kann dieser kleiner dimensioniert werden. Falls der erste und der zweite Verdampfer separaten Kühlkreiläufen angehören, kann zudem der gesamte Kühlkreislauf des zweiten Verdampfers im Hinblick auf eine geringere Kühlleistung ausgelegt und optimiert werden, wodurch weitere Ressourcen gespart werden können.

Bevorzugt wird der zweite Verdampfer derart betrieben, dass die zweite Temperatur um zumindest 2°C höher ist als die erste Temperatur des ersten Verdampfers. Die bereits genannten Vorteile der Erfindung sind dann noch ausgeprägter.

Vorteilhaft werden der erste und der zweite Verdampfer derart betrieben, dass die erste Temperatur in einem Bereich von 2°C bis 8°C liegt, und dass die zweite Temperatur in einem Bereich von 10°C bis 20°C, bevorzugt 13°C bis 20°C, liegt. Die Klimatisierung der in den Fahrgastraum einströmenden Luft wird bei diesen Temperaturwerten als besonders angenehm empfunden.

Bevorzugt werden die vom ersten Verdampfer abgekühlte Frischluft und die vom zweiten Verdampfer abgekühlte Umluft noch vor dem Eintritt in den Fahrgastraum miteinander vermischt. Die Luft weist dadurch bereits beim Einströmen in den Fahrgastraum die gewünschte Konditionierung auf, insbesondere was die Temperatur, die Feuchtigkeit und der CO₂-Gehalt angeht.

Zum Ansaugen der Frischluft wird vorteilhaft ein erstes Luftfördermittel und zum Ansaugen der Umluft vorteilhaft ein zweites Luftfördermittel verwendet. Mittels des ersten und des zweiten Luftfördermittels, welche insbesondere als Ventilator ausgebildet sein können, können die dem ersten Verdampfer und die dem zweiten Verdampfer zugeführten Luftmengen beliebig und unabhängig voneinander eingestellt werden.

In einer insbesondere bevorzugten Ausführungsform wird vorteilhaft automatisch, z.B. mittels eines Sensors, ein Messwert ermittelt, welcher einer im Kraftfahrzeug vorliegenden Temperatur, einer im Kraftfahrzeug vorliegenden Luftfeuchtigkeit und/oder einem im Kraftfahrzeug vorliegenden CO₂-Gehalt von Luft entspricht. Der Messwert bildet also eine im Kraftfahrzeug vorliegende Temperatur, Luftfeuchtigkeit und/oder CO₂-Gehalt ab. Die Förderleistung des ersten Luftfördermittels, die Förderleistung des zweiten Luftfördermittels, die Kühlleistung des ersten Verdampfers und/oder die Kühlleistung des zweiten Verdampfers werden dann in Abhängigkeit dieses ermittelten Messwerts geregelt. Auf diese Weise kann eine erwünschte Temperatur und/oder eine erwünschte Luftfeuchtigkeit und/oder ein erwünschter CO₂-Gehalt im Fahrgastraum erreicht oder entsprechende Maximal- und/oder Minimalwerte eingehalten werden. Grundsätzlich können hierzu sowohl die Förderleistungen der beiden Luftfördermittel als auch die Kühlleistungen der Verdampfer variiert werden. Besonders einfach ist es jedoch, wenn zum Erreichen bzw. Einhalten eines bestimmten Werts nur die Förderleistungen der Luftfördermittel variiert werden und die Kühlleistungen der Verdampfer dabei im Wesentlichen unverändert belassen werden oder, vorteilhafter, derart eingestellt werden (z.B. mittels Thermostaten), dass der am jeweiligen Verdampfer vorbeiströmende Luftstrom auf eine vorbestimmte, konstante Temperatur abgekühlt wird.

Vorteilhaft wird der Messwert dabei im Fahrgastraum ermittelt, welches den für den Fahrer des Kraftfahrzeugs massgebenden Ort darstellt.

Alternativ kann der Messwert aber auch luftstromabwärts vom ersten Verdampfer und/oder luftstromabwärts vom zweiten Verdampfer, noch vor dem Einströmen der Luft in den Fahrgastraum ermittelt werden. Die Temperatur bzw. Luftfeuchtigkeit bzw. der CO₂-Gehalt kann dann besonders einfach und genau geregelt werden.

Gemäss einer Weiterbildung der Erfindung entspricht der ermittelte Messwert einem im Kraftfahrzeug vorliegenden CO₂-Gehalt von Luft. Das erste bzw. zweite Luftfördermittel und/oder der erste bzw. zweite Verdampfer werden dann derart geregelt, dass der CO₂-Gehalt der im Fahrgastraum vorliegenden Luft höchstens 5000 ppm, bevorzugt weniger als 2000 ppm beträgt. Für den Fahrer des Kraftfahrzeugs kann dadurch ein optimaler CO₂-Gehalt im Fahrgastraum eingestellt werden, so dass insbesondere einer durch CO₂ verursachten Müdigkeit des Fahrers entgegengewirkt werden kann.

Vorteilhaft wird zumindest ein Teil der vom ersten Verdampfer abgekühlten Frischluft zur Windschutzscheibe, insbesondere zu einer Innenseite der Windschutzscheibe, des Kraftfahrzeugs hin geleitet. Der zur Windschutzscheibe hin geleitete Luftstrom weist dabei in der Regel und bevorzugt im Wesentlichen keine Anteile der vom zweiten Verdampfer abgekühlten Umluft auf. Die vom ersten Verdampfer abgekühlte Luft weist üblicherweise eine geringere Luftfeuchtigkeit auf als die vom zweiten Verdampfer gekühlte Umluft und ist daher besonders gut dazu geeignet, ein Beschlagen der Windschutzscheibe zu verhindern.

Zusätzlich zur Frischluft kann Umluft aus dem Fahrgastraum dem ersten Verdampfer zugeführt und von diesem auf die erste Temperatur abgekühlt werden. Je nach Bedarf kann z.B. mittels einer steuerbaren Klappe die angesogene Umluft nur dem zweiten Verdampfer oder nur dem ersten Verdampfer zugeführt werden. Im Falle, dass die Umluft nur dem ersten Verdampfer zugeführt wird, kann der zweite Verdampfer, bzw. der mit diesem verbundene Kühlkreislauf, zum Energiesparen ausgeschaltet werden. Es sind in Bezug auf die Klappe auch Zwischenstellungen möglich, in welchen ein erster Anteil der Umluftmenge zum ersten Verdampfer und ein zweiter Anteil der Umluftmenge zum zweiten Verdampfer geleitet werden.

Erfindungsgemäss wird zudem ein Kraftfahrzeug mit einer Klimaanlage angegeben, welche zum Betrieb gemäss dem beschriebenen Verfahren geeignet ist. Die Klimaanlage weist auf:
- einen ersten Verdampfer;
- einen zweiten Verdampfer;
- einen ersten Luftkanal, welcher lufteinlassseitig nach aussen hin mündet und dazu dient, Frischluft von ausserhalb des Kraftfahrzeugs zum ersten Verdampfer hin zu leiten;
- einen zweiten Luftkanal, welcher lufteinlassseitig in einen Fahrgastraum des Kraftfahrzeugs mündet und dazu dient, Umluft vom Fahrgastraum zum zweiten Verdampfer hin zu leiten;
- eine Luftleitstruktur, welche zumindest eine luftauslassseitig in den Fahrgastraum mündende Öffnung aufweist und dazu dient, vom ersten und vom zweiten Verdampfer abgekühlte Luft in den Fahrgastraum zu leiten; sowie
- eine Steuereinheit zum Regeln der Kühlleistung des ersten Verdampfers, wobei die Steuereinheit dazu ausgelegt ist, die Kühlleistung des ersten Verdampfers derart zu regeln, dass dieser die Frischluft auf eine erste Temperatur von weniger als 10°C abkühlt.
Die Steuereinheit dient zudem zum Regeln der Kühlleistung des zweiten Verdampfers und ist dazu ausgelegt, die Kühlleistung des zweiten Verdampfers derart zu regeln, dass dieser die Umluft im Wesentlichen, bevorzugt vollständig, kondensationsfrei auf eine zweite Temperatur abkühlt, welche höher liegt als die erste Temperatur. Die Steuereinheit ist somit so eingestellt bzw. programmiert, dass der erste Verdampfer die Frischluft auf weniger als 10°C abkühlt, und dass der zweite Verdampfer die Umluft kondensationsfrei auf eine im Vergleich dazu höhere zweite Temperatur abkühlt. Bevorzugt ist die Steuereinheit dazu ausgelegt, den zweiten Verdampfer derart zu regeln, dass dieser die Umluft auf nicht weniger als 10°C abkühlt.

Die Luftleitstruktur kann aus miteinander verbundenen, d.h. ineinander mündende Luftkanälen bestehen oder auch vollständig getrennt voneinander verlaufende Luftkanäle aufweisen.

Die Steuereinheit kann zudem insbesondere dazu ausgelegt sein, die Kühlleistungen des ersten und des zweiten Verdampfers derart zu regeln, dass die vom ersten Verdampfer abgekühlte Frischluft eine um zumindest 2°C niedrigere Temperatur aufweist als die vom zweiten Verdampfer abgekühlte Umluft.

Das Kraftfahrzeug weist zusätzlich bevorzugt ein erstes Luftfördermittel zum Ansaugen von Frischluft in den ersten Luftkanal auf, sowie ein zweites Luftfördermittel zum Ansaugen von Umluft in den zweiten Luftkanal, wobei die Steuereinheit dann außerdem bevorzugt zum Regeln der Förderleistungen des ersten und des zweiten Luftfördermittels dient.

Zur Regelung der Kühlleistungen des ersten bzw. zweiten Verdampfers weist das Kraftfahrzeug zusätzlich vorteilhaft einen mit der Steuereinheit verbundenen Sensor zum Messen eines Messwertes auf, welcher einer im Kraftfahrzeug vorliegenden Temperatur und/oder einer im Kraftfahrzeug vorliegenden Luftfeuchtigkeit und/oder einem im Kraftfahrzeug vorliegenden CO₂-Gehalt von Luft entspricht. Die Steuereinheit ist dann insbesondere vorteilhaft dazu ausgelegt, die Förderleistung des ersten Luftfördermittels, die Förderleistung des zweiten Luftfördermittels, die Kühlleistung des ersten Verdampfers und/oder die Kühlleistung des zweiten Verdampfers in Abhängigkeit dieses ermittelten Messwerts zu regeln. Es ist durchaus denkbar, dass die Steuereinheit die Kühlleistung der Verdampfer nicht mittels direkter Steuerung der Leistung des im entsprechenden Kühlkreislauf angeordneten Kompressors regelt, sondern indirekt mittels Regelung der Förderleistung der Luftfördermittel, wobei die Verdampfertemperatur dann z.B. mittels eines Thermostats auf einer bestimmte Temperatur konstant gehalten wird.

Bevorzugt weist das Kraftfahrzeug zusätzlich einen innerhalb des ersten Luftkanals angeordneten Wasserkasten auf, welcher zur Vorentfeuchtung der zum ersten Verdampfer hin geleiteten Frischluft dient. Im Wasserkasten können insbesondere bei Regen und beim Waschen des Kraftfahrzeugs Schwallwasser und im Luftstrom enthaltene Wassertropfen abgeschieden werden.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Darstellung einer für den erfindungsgemässen Betrieb geeigneten Klimaanlage gemäss einer ersten Ausführungsform, in einem teilweise dargestellten Kraftfahrzeug;
- Fig. 2: eine schematische Darstellung einer für den erfindungsgemässen Betrieb geeigneten Klimaanlage gemäss einer zweiten Ausführungsform, in einem teilweise dargestellten Kraftfahrzeug; sowie
- Fig. 3: eine schematische Darstellung einer für den erfindungsgemässen Betrieb geeigneten Klimaanlage gemäss einer dritten Ausführungsform, in einem teilweise dargestellten Kraftfahrzeug.

### BESCHREIBUNG BEVORZUGTER AUSFÜHRUNGSFORMEN

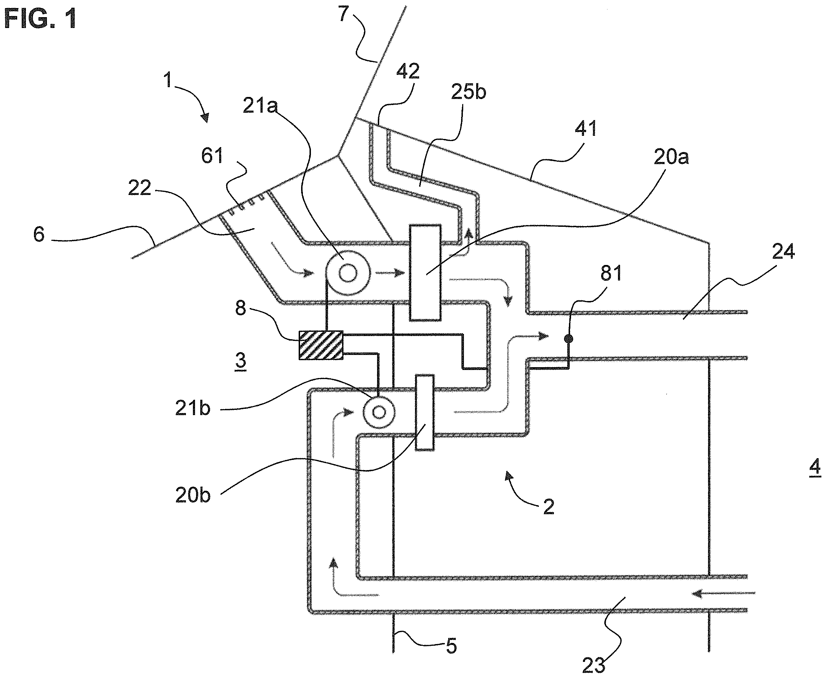

In den Figuren 1 bis 3 sind schematisch Klimaanlagen 2 von Kraftfahrzeugen 1 dargestellt, welche jeweils für den Betrieb mit dem erfindungsgemässen Verfahren geeignet sind. Die in den Figuren 1 bis 3 gezeigten Kraftfahrzeuge 1 sind jeweils nur teilweise und angedeutet dargestellt. Gleiche oder ähnliche Merkmale sind in den Figuren 1 bis 3 jeweils mit denselben Bezugszeichen bezeichnet.

Die in der Figur 1 gezeigte Klimaanlage 2 weist einen Frischlufteinlasskanal 22 auf, welcher dazu dient, Frischluft von ausserhalb des Kraftfahrzeugs 1 zu einem ersten Verdampfer 20a hin zu leiten. Innerhalb des Frischlufteinlasskanals 22 ist ein erstes Luftfördermittel 21a in Form eines Ventilators angeordnet, mittels welchem Frischluft in den Frischlufteinlasskanal 22 angesaugt und dem ersten Verdampfer 20a zugeführt wird. Der Frischlufteinlasskanal 22 mündet lufteinlassseitig im Bereich einer Motorhaube 6 des Kraftfahrzeugs 1 nach aussen hin. Um das Eintreten von Schmutz, wie insbesondere Laub, Schnee etc. in den Frischlufteinlasskanal 22 zu verhindern, ist dieser im Bereich der Motorhaube 6 mit einem Gitter 61 verschlossen.

Die Klimaanlage 2 weist zudem einen Umlufteinlasskanal 23 auf, welcher lufteinlassseitig z.B. im Bereich eines Armaturenbretts 41 in einen Fahrgastraum 4 des Kraftfahrzeugs 1 mündet und dazu dient, Umluft aus dem Fahrgastraum 4 einem zweiten Verdampfer 20b zuzuführen. Innerhalb des Umlufteinlasskanals 23 ist ein zweites Luftfördermittel 21b in Form eines Ventilators vorgesehen, um Umluft aus dem Fahrgastraum 4 in den Umlufteinlasskanal 23 anzusaugen.

Der Frischlufteinlasskanal 22 und der Umlufteinlasskanal 23 durchsetzen jeweils eine Stirnwand 5, welche das Innere des Kraftfahrzeugs 1 in einen Motorraum 3 und den Fahrgastraum 4 unterteilt.

Die Verdampfer 20a und 20b sind jeweils Teil eines in den Figuren nicht gezeigten Kühlkreislaufs mit Kompressor, Kondensator und Drossel. Derartige Kühlkreisläufe sind dem Fachmann hinlänglich bekannt: Ein gasförmiges Kältemittel wird durch einen Kompressor adiabatisch verdichtet, um in entsprechend erwärmter Form in einem Kondensator Wärme abzugeben und sich dabei zu verflüssigen. Via eine Drossel, in welcher der Druck gesenkt wird, gelangt das Kältemittel in den Verdampfer, in welchem die Verdampfungswärme aus dem den Verdampfer umströmenden Luftstrom aufgenommen wird. Der Luftstrom wird dadurch im Bereich des Verdampfers abgekühlt. Vom Verdampfer gelangt das Kältemittel schliesslich gasförmig zurück zum Kompressor.

Die Frischluft wird im ersten Verdampfer 20a auf eine Temperatur von weniger als 10°C abgekühlt. Dabei wird am ersten Verdampfer 20a Kondenswasser ausgeschieden. Aufgrund der tiefen Temperatur des Kondenswassers kann aber kein Bakterienwachstum stattfinden, wodurch eine Geruchsbildung verhindert wird. Zur Abkühlung der Frischluft auf eine bestimmte Temperatur von weniger als 10°C kann im Bereich des Verdampfers 20a ein Thermostat angeordnet sein, welcher den Kompressor des mit dem ersten Verdampfer 20a verbundenen Kühlkreislaufs bei Bedarf automatisch ein- bzw. ausschaltet.

Die Umluft wird vom zweiten Verdampfer 20b auf eine Temperatur abgekühlt, welche 10°C oder mehr beträgt und somit höher liegt als die Temperatur des ersten Verdampfers 20a. Dadurch kann der zweite Verdampfer 20b mit wesentlich geringerem Energieaufwand betrieben werden als der erste Verdampfer 20a, welcher die vorbeiströmende Luft auf eine im Vergleich wesentlich tiefere Temperatur abkühlt. Obwohl der zweite Verdampfer 20b bei einer Temperatur von 10°C oder mehr und somit in einem für das Bakterienwachstum günstigen Temperaturbereich betrieben wird, entstehen auch im Bereich des zweiten Verdampfers 20b keine bakterienbedingten Gerüche. Dies deshalb, weil die verhältnismässig trockene Umluft im zweiten Verdampfer 20b nur soweit abgekühlt wird, dass keine Kondensation stattfindet. Die Umluft erreicht somit ihren Kondensationspunkt nicht, so dass am zweiten Verdampfer 20b kein Kondenswasser ausgeschieden wird. Dementsprechend kann sich im zweiten Verdampfer 20b kein Wasser ansammeln, welches ein Bakterienwachstum begünstigen würde.

Vom ersten Verdampfer 20a bzw. vom zweiten Verdampfer 20b aus gelangen die abgekühlte Frischluft bzw. die abgekühlte Umluft via entsprechende Luftkanäle in einen Mischluftauslasskanal 24. Der Mischluftauslasskanal 24, in welchem die vom ersten Verdampfer 20a und vom zweiten Verdampfer 20b her kommenden Luftströme miteinander vermischt werden, mündet via eine z.B. im Armaturenbrett 41 angeordnete Öffnung in den Fahrgastraum 4.

Noch bevor die vom ersten Verdampfer 20a abgekühlte Frischluft auf die vom zweiten Verdampfer 20b abgekühlte Umluft trifft, zweigt unmittelbar luftstromabwärts vom ersten Verdampfer 20a ein Frischluftauslasskanal 25b ab, durch welchen hindurch ein Teil des abgekühlten Frischluftstroms, jedoch keine Umluft, strömt. Der Frischluftauslasskanal 25b mündet via eine von einem Gitter 42 verschlossene Öffnung im Bereich des Armaturenbretts 41 derart in den Fahrgastraum 4, dass die durch den Frischluftauslasskanal 25 strömende Frischluft direkt gegen die Innenseite einer Windschutzscheibe 7 strömt. Auf diese Weise kann mit Hilfe der abgekühlten, aber verhältnismässig trockenen Frischluft ein Beschlagen der Windschutzscheibe 7 verhindert werden.

Via Steuerleitungen ist eine Steuereinheit 8 mit den beiden Luftfördermitteln 21a und 21b verbunden. Außerdem ist die Steuereinheit 8 via einer Datenleitung mit einem Sensor 81 verbunden, welcher hier im Inneren des Mischluftauslasskanals 24 angeordnet ist. Mittels des Sensors 81 wird die Temperatur, Luftfeuchtigkeit und/oder der CO₂-Gehalt der Luft vor dem Einströmen in den Fahrgastraum 4 gemessen. Die Steuereinheit 8 ist aufgrund ihrer Programmierung dazu ausgelegt, das Verhältnis der Mengenanteile von Frischluft zu Umluft in der in den Fahrgastraum 4 einströmenden Mischluft automatisch in Abhängigkeit des ermittelten Messwertes durch entsprechendes Regeln der Förderleistungen der Luftfördermittel 21a und 21b anzupassen. Die Kühlleistungen der Verdampfer 20a und 20b werden dabei jeweils mittels eines Thermostaten an die vorbeiströmende Luftmenge angepasst.

Anstelle der Förderleistungen der Luftfördermittel 21a und 21b könnte die Steuereinheit 8 alternativ auch die Kühlleistungen der Verdampfer 20a und 20b anpassen, um den gewünschten, vom Sensor 81 ermittelten Messwert zu erreichen. Die Steuereinheit 8 wäre in diesem Fall entsprechend mit den Verdampfern 20a und 20b verbunden. Die Regelung könnte insbesondere auch derart vorgesehen sein, dass ein gewisser Grenzwert bestimmt wird, der von dem durch den Sensor 81 ermittelten Messwert nicht über- oder unterschritten werden darf. Alternativ oder zusätzlich könnten auch einer oder mehrere mit der Steuereinheit 8 verbundene Sensoren z.B. im Fahrgastraum 4, im Frischlufteinlasskanal 22, im Umlufteinlasskanal 23 und/oder im Frischluftauslasskanal 25b vorgesehen sein. Die Regelung würde dann von der Steuereinheit 8 alternativ oder zusätzlich in Abhängigkeit der von diesen Sensoren ermittelten Messwerte vorgenommen.

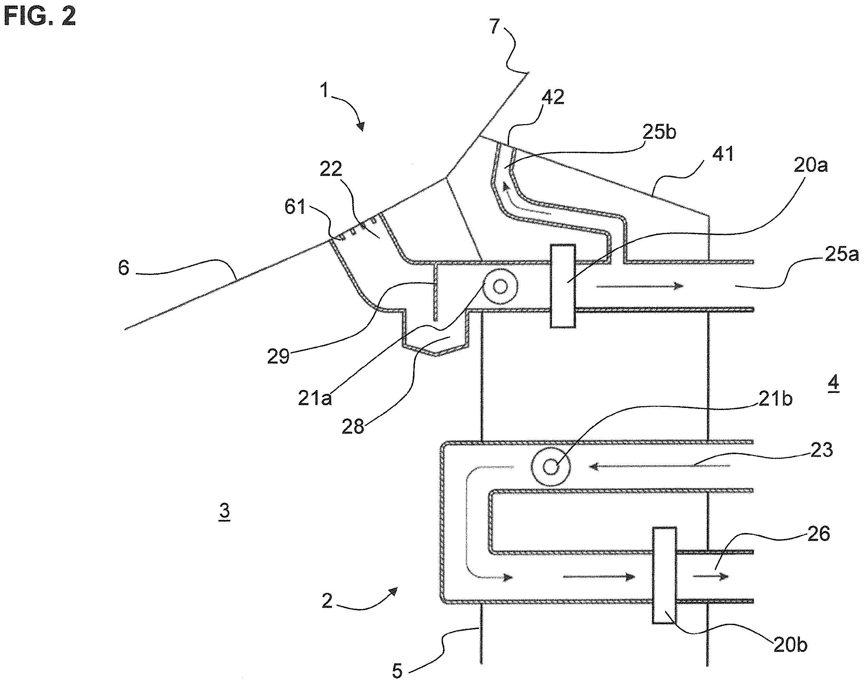

Die in der Figur 2 gezeigte Ausführungsform unterscheidet sich von der Ausführungsform der Figur 1 einerseits dadurch, dass im Frischlufteinlasskanal 22 in Luftstromrichtung unmittelbar vor dem Luftfördermittel 21a ein Wasserkasten 28 vorgesehen ist, und andererseits dadurch, dass die beiden Luftströme der Frischluft und der Umluft nicht in einem gemeinsamen Mischluftauslasskanal miteinander vermischt werden, sondern getrennt voneinander in den Fahrgastraum 4 einströmen.

Der Wasserkasten 28 weist einen Innenraum auf, durch welchen hindurch die zum Verdampfer 20a hin geleitete Frischluft durchströmt. Im Innenraum des Wasserkastens 28 ist eine Umlenkstruktur 29 vorgesehen, welche von der einströmenden Luft in vertikaler und/oder horizontaler Richtung umströmt wird. Schwallwasser oder Wassertropfen, welche in der angesaugten Frischluft enthalten sind, werden an der Umlenkstruktur 29 abgeschieden, von einer in der Regel trichterförmigen Bodenwandung des Wasserkastens 28 gesammelt und von dort via eine üblicherweise im untersten Punkt der Bodenwandung angeordnete Wasseraustrittsöffnung des Wasserkastens 28 nach aussen hin ausgeschieden. Der Wasserkasten 28 dient somit zur Vorentfeuchtung der zum ersten Verdampfer 20a hin geleiteten Frischluft.

Während die im ersten Verdampfer 20a abgekühlte Frischluft via einen Frischluftauslasskanal 25a in den Fahrgastraum 4 gelangt, strömt die im zweiten Verdampfer 20b abgekühlte Umluft durch einen separat vom Frischluftauslasskanal 25a ausgebildeten Umluftauslasskanal 26 in den Fahrgastraum 4 ein. Die abgekühlte Frischluft und die abgekühlte Umluft vermischen sich hier somit erst im Fahrgastraum 4 miteinander.

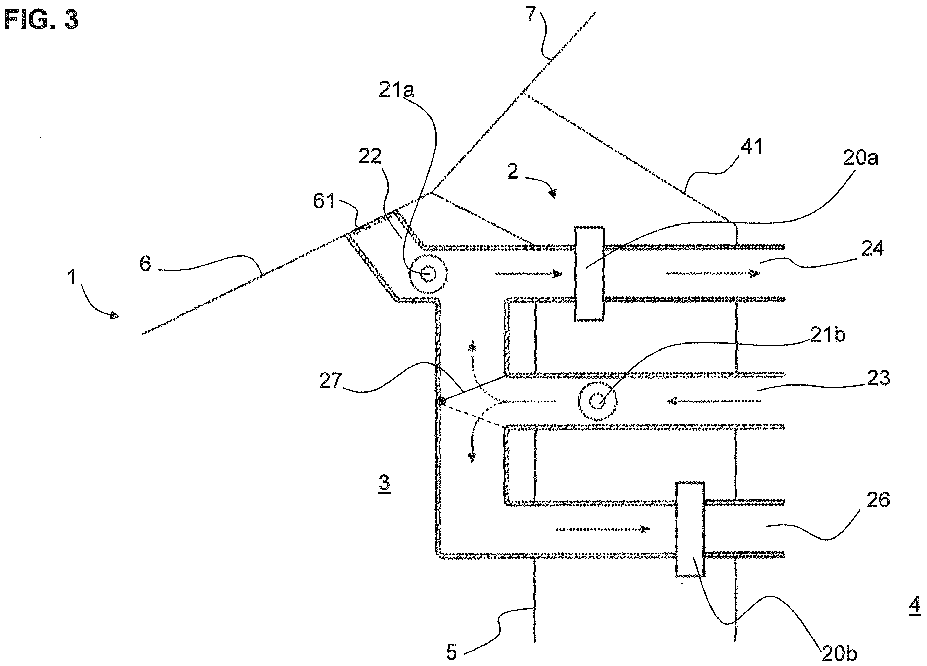

Eine weitere Ausführungsform ist in der Figur 3 gezeigt. Im Vergleich zu der in der Figur 2 gezeigten Ausführungsform ist hier kein Wasserkasten 28 vorgesehen. Es fehlt auch ein Frischluftauslasskanal 25b, dessen Auslassöffnung direkt gegen die Windschutzscheibe 7 gerichtet wäre. Zudem sind ähnlich wie bei der in der Figur 2 gezeigten Ausführungsform separate Luftkanäle 24 und 26 vorgesehen, um die vom ersten Verdampfer 20a und die vom zweiten Verdampfer 20b abgekühlten Luftströme separat voneinander in den Fahrgastraum 4 zu führen.

Bei der Ausführungsform der Figur 3 kann die Umluft mittels entsprechender Steuerung einer Klappe 27 aber entweder zusammen mit der Frischluft durch den ersten Verdampfer 20a oder separat zur Frischluft durch den zweiten Verdampfer 20b geleitet werden. In der in der Figur 3 gezeigten Stellung der Klappe 27 (durchgezogene Linie) gelangt die Umluft getrennt von der Frischluft zum zweiten Verdampfer 20b und von dort aus durch den Umluftauslasskanal 26 in den Fahrgastraum 4. Die Funktion der Klimaanlage entspricht dann im Wesentlichen der in der Figur 2 gezeigten Ausführungsform. Bei der mit einer gestrichelten Linie in der Figur 3 gezeigten Stellung der Klappe 27 gelangt die Umluft ebenso wie die Frischluft zum ersten Verdampfer 20a, wo sie abgekühlt und von dort aus durch den Mischluftauslasskanal 24 dem Fahrgastraum 4 zugeführt wird. Die mit der gestrichelten Linie gezeigte Klappenstellung hat den Vorteil, dass der zweite Verdampfer 20b vollständig ausgeschaltet werden kann, und dass mittels entsprechender Einstellung der Förderleistungen der Luftfördermittel 21a und 21b trotzdem ein nahezu beliebiges Verhältnis der Luftmengenanteile von Frischluft zu Umluft gewählt werden kann.

Die Stellung der Klappe 27 kann z.B. von einer hier nicht gezeigten Steuereinheit in Abhängigkeit der ausserhalb und/oder innerhalb des Kraftfahrzeugs 1 von Sensoren ermittelten Luftbedingungen gewählt werden. Selbstverständlich sind in Bezug auf die Klappe 27 auch Zwischenstellungen möglich, in welchen ein erster Anteil der Umluftmenge zum ersten Verdampfer 20a und ein zweiter Anteil der Umluftmenge zum zweiten Verdampfer 20b geleitet werden.

Selbstverständlich ist die hier beschriebene Erfindung nicht auf die erwähnten Ausführungsformen beschränkt und eine Vielzahl von Abwandlungen ist möglich. So können die verschiedenen Elemente der drei in den Figuren 1-3 gezeigten Ausführungsformen auch in den jeweils anderen Ausführungsformen verwendet werden. Der Wasserkasten 28 kann z.B. genauso wie die Steuereinheit 8 und der Sensor 81 (bzw. mehrere Sensoren) bei jeder der drei in den Figuren 1-3 gezeigten Ausführungsformen zum Einsatz kommen. Eine Vielzahl weiterer Abwandlungen und Kombinationen ist im Rahmen der Ansprüche denkbar.

### BEZUGSZEICHENLISTE

| | | | |
|---|---|---|---|
| 1 | Kraftfahrzeug | | |
| | | 4 | Fahrgastraum |
| 2 | Klimaanlage | 41 | Armaturenbrett |
| 20a, b | Verdampfer | 42 | Gitter |
| 21a, b | Luftfördermittel | | |
| 22 | Frischlufteinlasskanal | 5 | Stirnwand |
| 23 | Umlufteinlasskanal | | |
| 24 | Mischluftauslasskanal | 6 | Motorhaube |
| 25a, b | Frischluftauslasskanal | 61 | Gitter |
| 26 | Umluftauslasskanal | | |
| 27 | Klappe | 7 | Windschutzscheibe |
| 28 | Wasserkasten | | |
| 29 | Umlenkstruktur | 8 | Steuereinheit |
| | | 81 | Sensor |
| 3 | Motorraum | | |

## Patentansprüche

1. Verfahren zum Betrieb einer Klimaanlage (2) eines Kraftfahrzeugs (1), aufweisend zumindest die Schritte, dass
- Frischluft von ausserhalb des Kraftfahrzeugs (1) einem ersten Verdampfer (20a) zugeführt und vom ersten Verdampfer (20a) auf eine erste Temperatur abgekühlt wird, welche weniger als 10°C beträgt;
- Umluft aus einem Fahrgastraum (4) des Kraftfahrzeugs (1) einem zweiten Verdampfer (20b) zugeführt und vom zweiten Verdampfer (20b) auf eine zweite Temperatur abgekühlt wird;
- die vom ersten Verdampfer (20a) abgekühlte Frischluft und die vom zweiten Verdampfer (20b) abgekühlte Umluft in den Fahrgastraum (4) geleitet werden;
**dadurch gekennzeichnet, dass**
der zweite Verdampfer (20b) derart betrieben wird, dass die zweite Temperatur höher liegt als die erste Temperatur, und dass die Kühlung der Umluft im Wesentlichen kondensationsfrei stattfindet.

2. Verfahren nach Anspruch 1, wobei der zweite Verdampfer (20b) derart betrieben wird, dass die zweite Temperatur zumindest 10°C beträgt.

3. Verfahren nach einem der Ansprüche 1 oder 2, wobei der zweite Verdampfer (20b) derart betrieben wird, dass die zweite Temperatur um zumindest 2°C höher ist als die erste Temperatur.

4. Verfahren nach Anspruch 3, wobei der erste und der zweite Verdampfer (20a, 20b) derart betrieben werden, dass die erste Temperatur in einem Bereich von 2°C bis 8°C liegt, und dass die zweite Temperatur in einem Bereich von 10°C bis 20°C, bevorzugt 13°C bis 20°C, liegt.

5. Verfahren nach einem der vorhergehenden Ansprüche, wobei die vom ersten Verdampfer (20a) abgekühlte Frischluft und die vom zweiten Verdampfer (20b) abgekühlte Umluft noch vor dem Eintritt in den Fahrgastraum (4) miteinander vermischt werden.

6. Verfahren nach einem der vorhergehenden Ansprüche, wobei ein erstes Luftfördermittel (21a) zum Ansaugen der Frischluft und ein zweites Luftfördermittel (21b) zum Ansaugen der Umluft verwendet werden.

7. Verfahren nach Anspruch 6, wobei ein Messwert ermittelt wird, welcher einer im Kraftfahrzeug (1) vorliegenden Temperatur, einer im Kraftfahrzeug (1) vorliegenden Luftfeuchtigkeit und/oder einem im Kraftfahrzeug (1) vorliegenden CO₂-Gehalt von Luft entspricht, und wobei die Förderleistung des ersten Luftfördermittels (21a), die Förderleistung des zweiten Luftfördermittels (21b), die Kühlleistung des ersten Verdampfers (20a) und/oder die Kühlleistung des zweiten Verdampfers (20b) in Abhängigkeit dieses ermittelten Messwerts geregelt werden.

8. Verfahren nach Anspruch 7, wobei der Messwert im Fahrgastraum (4) ermittelt wird.

9. Verfahren nach Anspruch 7, wobei der Messwert luftstromabwärts vom ersten Verdampfer (20a) und/oder luftstromabwärts vom zweiten Verdampfer (20b), noch vor dem Einströmen der Luft in den Fahrgastraum (4) ermittelt wird.

10. Verfahren nach einem der Ansprüche 7 bis 9, wobei der ermittelte Messwert einem im Kraftfahrzeug (1) vorliegenden CO₂-Gehalt von Luft entspricht, und wobei das erste bzw. zweite Luftfördermittel (21a, 21b) und/oder der erste bzw. zweite Verdampfer (20a, 20b) derart geregelt werden, dass der CO₂-Gehalt der im Fahrgastraum (4) vorliegenden Luft höchstens 5000 ppm, bevorzugt weniger als 2000 ppm beträgt.

11. Verfahren nach einem der vorhergehenden Ansprüche, wobei zumindest ein Teil der vom ersten Verdampfer (20a) abgekühlten Frischluft zur Windschutzscheibe (7) des Kraftfahrzeugs (1) hin geleitet wird.

12. Verfahren nach einem der vorhergehenden Ansprüche, wobei zusätzlich Umluft aus dem Fahrgastraum (4) dem ersten Verdampfer (20a) zugeführt und vom ersten Verdampfer (20a) auf die erste Temperatur abgekühlt wird.

13. Kraftfahrzeug (1) mit einer Klimaanlage (2) aufweisend
- einen ersten Verdampfer (20a);
- einen zweiten Verdampfer (20b);
- einen ersten Luftkanal (22), welcher lufteinlassseitig nach aussen hin mündet und dazu dient, Frischluft von ausserhalb des Kraftfahrzeugs (1) zum ersten Verdampfer (20a) hin zu leiten;
- einen zweiten Luftkanal (23), welcher lufteinlassseitig in einen Fahrgastraum (4) des Kraftfahrzeugs (1) mündet und dazu dient, Umluft vom Fahrgastraum (4) zum zweiten Verdampfer (20b) hin zu leiten;
- eine Luftleitstruktur (24; 25a, 26; 24, 26), welche zumindest eine luftauslassseitig in den Fahrgastraum (4) mündende Öffnung aufweist und dazu dient, vom ersten und vom zweiten Verdampfer (20a, 20b) abgekühlte Luft in den Fahrgastraum (4) zu leiten; sowie
- eine Steuereinheit (8) zum Regeln der Kühlleistung des ersten Verdampfers (20a), wobei die Steuereinheit (8) dazu ausgelegt ist, die Kühlleistung des ersten Verdampfers (20a) derart zu regeln, dass dieser die Frischluft auf eine erste Temperatur von weniger als 10°C abkühlt;
**dadurch gekennzeichnet, dass**
die Steuereinheit (8) außerdem zum Regeln der Kühlleistung des zweiten Verdampfers (20b) dient und dazu ausgelegt ist, die Kühlleistung des zweiten Verdampfers (20b) derart zu regeln, dass dieser die Umluft im Wesentlichen kondensationsfrei auf eine zweite Temperatur abkühlt, welche höher liegt als die erste Temperatur.

14. Kraftfahrzeug (1) nach Anspruch 12, zusätzlich aufweisend ein erstes Luftfördermittel (21a) zum Ansaugen von Frischluft in den ersten Luftkanal (22) und ein zweites Luftfördermittel (21b) zum Ansaugen von Umluft in den zweiten Luftkanal (23), wobei die Steuereinheit (8) zudem zum Regeln der Förderleistungen des ersten und des zweiten Luftfördermittels (21a, 21b) dient.

15. Kraftfahrzeug (1) nach Anspruch 14, zusätzlich aufweisend einen mit der Steuereinheit (8) verbundenen Sensor (81) zum Messen eines Messwertes, welcher einer im Kraftfahrzeug (1) vorliegenden Temperatur, einer im Kraftfahrzeug (1) vorliegenden Luftfeuchtigkeit und/oder einem im Kraftfahrzeug (1) vorliegenden CO₂-Gehalt von Luft entspricht, wobei die Steuereinheit (8) dazu ausgelegt ist, die Förderleistung des ersten Luftfördermittels (21a), die Förderleistung des zweiten Luftfördermittels (21b), die Kühlleistung des ersten Verdampfers (20a) und/oder die Kühlleistung des zweiten Verdampfers (20b) in Abhängigkeit dieses ermittelten Messwerts zu regeln.

16. Kraftfahrzeug (1) nach einem der Ansprüche 13 bis 15, zusätzlich aufweisend einen innerhalb des ersten Luftkanals (22) angeordneten Wasserkasten (28), welcher zur Vorentfeuchtung der zum ersten Verdampfer (20a) hin geleiteten Frischluft dient.

## Claims

1. Method for the operation of an air conditioning device (2) of a motor vehicle (1), comprising at least the steps that
- fresh air is guided from outside of the motor vehicle (1) to a first evaporator (20a) and is cooled down by the first evaporator (20a) to a first temperature being less than 10 °C;
- recirculating air from a passenger compartment (4) of the motor vehicle (1) is guided to a second evaporator (20b) and is cooled down by the second evaporator (20b) to a second temperature;
- the fresh air cooled down by the first evaporator (20a) and the recirculating air cooled down by the second evaporator (20b) are guided into the passenger compartment (4);
**characterized in that**
the second evaporator (20b) is operated such that the second temperature is higher than the first temperature, and that the cooling of the recirculating air is carried out substantially without condensation.

2. Method according to claim 1, wherein the second evaporator (20b) is operated such that the second temperature is at least 10 °C.

3. Method according to one of claims 1 or 2, wherein the second evaporator (20b) is operated such that the second temperature is at least 2 °C higher than the first temperature.

4. Method according to claim 3, wherein the first and the second evaporator (20a, 20b) are operated such that the first temperature is in a region of 2 °C to 8 °C and that the second temperature is in a region of 10 °C to 20 °C, preferably 13 °C to 20 °C.

5. Method according to one of the preceding claims, wherein the fresh air cooled down by the first evaporator (20a) and the recirculating air cooled down by the second evaporator (20b) are mixed with each other already before the entrance into the passenger compartment (4).

6. Method according to one of the preceding claims, wherein a first air conveying means (21a) for aspiration of the fresh air and a second air conveying means (21b) for aspiration of the recirculating air are used.

7. Method according to claim 6, wherein a measurement value is determined which corresponds to a temperature being present in the motor vehicle (1), an air moisture being present in the motor vehicle (1) and/or a CO₂-content of air being present in the motor vehicle (1), and wherein the conveying power of the first air conveying means (21a), the conveying power of the second air conveying means (21b), the cooling power of the first evaporator (20a) and/or the cooling power of the second evaporator (20b) are controlled in dependence on this determined measurement value.

8. Method according to claim 7, wherein the measurement value is determined in the passenger compartment (4).

9. Method according to claim 7, wherein the measurement value is determined, in the direction of the air, downstream of the first evaporator (20a) and/or downstream of the second evaporator (20b), already before the inflow of the air into the passenger compartment (4).

10. Method according to one of claims 7 to 9, wherein the determined measurement value corresponds to a CO₂-content of air being present in the motor vehicle (1), and wherein the first or second air conveying means (21a, 21b) and/or the first or second evaporator (20a, 20b) are controlled such that the CO₂-content of the air being present in the passenger compartment (4) is at the most 5000 ppm, preferably less than 2000 ppm.

11. Method according to one of the preceding claims, wherein at least a part of the fresh air cooled down by the first evaporator (20a) is guided to the windshield (7) of the motor vehicle (1).

12. Method according to one of the preceding claims, wherein additionally recirculating air from the passenger compartment (4) is guided to the first evaporator (20a) and is cooled down by the first evaporator (20a) to the first temperature.

13. Motor vehicle (1) with an air conditioning device (2) comprising
- a first evaporator (20a);
- a second evaporator (20b);
- a first air duct (22) which opens to the outside on the air inlet side and serves to guide fresh air from outside of the motor vehicle (1) to the first evaporator (20a);
- a second air duct (23) which opens into a passenger compartment (4) of the motor vehicle (1) on the air inlet side and serves to guide recirculating air from the passenger compartment (4) to the second evaporator (20b);
- an air guidance structure (24; 25a, 26; 24, 26) which comprises at least one opening that opens into the passenger compartment (4) on the air outlet side and serves to guide air cooled down by the first and by the second evaporator (20a, 20b) into the passenger compartment (4); and
- a control unit (8) for controlling the cooling power of the first evaporator (20a), wherein the control unit (8) is adapted to control the cooling power of the first evaporator (20a) in such a way that the latter cools down the fresh air to a first temperature of less than 10 °C;
**characterized in that**
the control unit (8) in addition serves to control the cooling power of the second evaporator (20b) and is adapted to control the cooling power of the second evaporator (20b) in such a way that the latter cools down the recirculating air substantially without condensation to a second temperature which is higher than the first temperature.

14. Motor vehicle (1) according to claim 12, additionally comprising a first air conveying means (21a) for aspirating fresh air into the first air duct (22) and a second air conveying means (21b) for aspirating recirculating air into the second air duct (23), wherein the control unit (8) additionally serves for controlling the conveying powers of the first and the second air conveying means (21a, 21b).

15. Motor vehicle (1) according to claim 14, additionally comprising a sensor (81) connected with the control unit (8) for measuring a measurement value which corresponds to a temperature being present in the motor vehicle (1), an air moisture being present in the motor vehicle (1) and/or a CO₂-content of air being present in the motor vehicle (1), wherein the control unit (8) is adapted to control the conveying power of the first air conveying means (21a), the conveying power of the second air conveying means (21b), the cooling power of the first evaporator (20a) and/or the cooling power of the second evaporator (20b) in dependence on this determined measurement value.

16. Motor vehicle (1) according to one of claims 13 to 15, additionally comprising a water box (28) being arranged within the first air duct (22), the water box (28) serving for pre-dehumidification of the fresh air guided to the first evaporator (20a).

## Revendications

1. Procédé de fonctionnement d'une climatisation (2) d'un véhicule automobile (1), comportant au moins les étapes de,
- l'air frais est amené depuis l'extérieur du véhicule automobile (1) vers un premier évaporateur (20a) et refroidi par le premier évaporateur (20a) à une première température étant inférieure à 10°C ;
- l'air circulant est amené depuis la cabine (4) du véhicule automobile (1) vers un deuxième évaporateur (20b) et refroidi par le deuxième évaporateur (20b) à une deuxième température;
- l'air frais refroidi par le premier évaporateur (20a) et l'air circulant refroidi par le deuxième évaporateur (20b) sont conduits vers la cabine (4) ;
**caractérisé en ce que**
le deuxième évaporateur (20b) est opéré de telle sorte que la deuxième température est supérieure à la première température, et que le refroidissement de l'air circulant s'effectue sensiblement sans condensation.

2. Procédé selon la revendication 1, où le deuxième évaporateur (20b) est opéré de telle sorte que la deuxième température est au moins 10°C.

3. Procédé selon une des revendications 1 ou 2, où le deuxième évaporateur (20b) est opéré de telle sorte que la deuxième température est supérieure d'au moins 2°C à la première température.

4. Procédé selon la revendication 3, où le premier et le deuxième évaporateur (20a, 20b) sont opérés de telle sorte que la première température se situe dans un domaine de 2°C à 8°C et que la deuxième température se situe dans un domaine de 10°C à 20°C, préférablement de 13°C à 20°C.

5. Procédé selon une des revendications précédentes, où l'air frais refroidi par le premier évaporateur (20a) et l'air circulant refroidi par le deuxième évaporateur (20b) sont mélangés l'un à l'autre avant d'entrer dans la cabine (4).

6. Procédé selon une des revendications précédentes, où un premier moyen de transport d'air (21a) pour l'aspiration de l'air frais et un deuxième moyen de transport d'air (21b) pour l'aspiration de l'air circulant sont utilisés.

7. Procédé selon la revendication 6, où une valeur du mesure est déterminée, laquelle correspond à une température qui existe dans le véhicule automobile (1), à une humidité qui existe dans le véhicule automobile (1), et/ou à une teneur de l'air en CO₂ qui existe dans le véhicule (1), et où la puissance de transport du premier moyen de transport d'air (21a), la puissance de transport du deuxième moyen de transport d'air (21b), la puissance de refroidissement du premier évaporateur (20a) et/ou la puissance de refroidissement du deuxième évaporateur (20b) sont réglées en fonction de la dite valeur de mesure déterminée.

8. Procédé selon la revendication 7, où la valeur de mesure est déterminée dans la cabine (4).

9. Procédé selon la revendication 7, où la valeur de mesure est déterminée en aval de l'écoulement d'air du premier évaporateur (20a) et/ou en aval de l'écoulement d'air du deuxième évaporateur (20b), avant l'entrée de l'air dans la cabine (4).

10. Procédé selon une des revendications 7 à 9, où la valeur de mesure déterminée correspond à une teneur de l'air en CO₂ qui existe dans le véhicule automobile (1), et où le premier, respectivement le deuxième moyen de transport d'air (21a, 21b) et/ou le premier, respectivement le deuxième évaporateur (20a, 20b) sont réglés de telle sorte que la teneur de l'air en CO₂ qui existe dans la cabine (4) s'élève au plus à 5000 ppm, préférablement à moins de 2000 ppm.

11. Procédé selon une des revendications précédentes, où au moins une partie de l'air frais refroidi par le premier évaporateur (20a) est conduit vers le pare-brise (7) du véhicule automobile (1).

12. Procédé selon une des revendications précédentes, où de l'air circulant est supplémentairement amené depuis la cabine (4) vers le premier évaporateur (20a) et est refroidi par le premier évaporateur (20a) à la première température.

13. Véhicule automobile (1) ayant d'une climatisation (2) comportant
- un premier évaporateur (20a)
- un deuxième évaporateur (20b)
- un premier canal d'air (22), lequel aboutit vers l'extérieur du côté d'entrée d'air et qui sert à conduire l'air frais depuis l'extérieur du véhicule automobile (1) vers le premier évaporateur (20a) ;
- un deuxième canal d'air (23), lequel aboutit vers une cabine (4) du véhicule automobile (1) du côté d'entrée d'air et qui sert à conduire l'air circulant depuis la cabine (4) vers le deuxième évaporateur (20b) ;
- une structure pour conduire l'air (24 ; 25a, 26, 24, 26), laquelle comporte au moins une ouverture aboutissant dans la cabine (4) du côté de sortie d'air et qui sert à conduire l'air refroidi par le premier et deuxième évaporateur (20a, 20b) vers la cabine (4) ; ainsi que
- une unité de contrôle (8) pour régler la puissance de refroidissement du premier évaporateur (20a), où l'unité de contrôle (8) est configurée pour régler la puissance de refroidissement du premier évaporateur (20a) de telle sorte que celui-ci refroidit l'air frais à une première température de moins de 10°C ;
**caractérisé en ce que**
- l'unité de contrôle (8) sert en outre à régler la puissance de refroidissement du deuxième évaporateur (20b) et est configurée pour régler la puissance de refroidissement du deuxième évaporateur (20b) de telle sorte que celui-ci refroidit sensiblement sans condensation l'air circulant à une deuxième température, laquelle est supérieure à la première température.

14. Véhicule automobile (1) selon la revendication 12, comportant en outre un premier moyen de transport d'air (21a) pour aspirer l'air frais dans le premier canal d'air (22) et un deuxième moyen de transport d'air (21b) pour aspirer l'air circulant dans le deuxième canal d'air (23), où l'unité de contrôle (8) sert en outre à régler la puissance de transport du premier et du deuxième moyen de transport d'air (21a, 21b).

15. Véhicule automobile (1) selon la revendication 14, comportant en outre un capteur (81) connecté à l'unité de contrôle (8) pour la mesure d'une valeur du mesure, laquelle correspond à une température qui existe dans le véhicule automobile (1), à une humidité qui existe dans le véhicule automobile (1) et/ou à une teneur de l'air en CO₂ qui existe dans le véhicule automobile (1), où l'unité de contrôle (8) est configurée pour régler la puissance de transport du premier moyen de transport d'air (21a), la puissance de transport du deuxième moyen de transport d'air (21b), la puissance de refroidissement du premier évaporateur (20a) et/ou la puissance de refroidissement du deuxième évaporateur (20b) en fonction de cette valeur de mesure déterminée.

16. Véhicule automobile (1) selon une des revendications 13 à 15, comportant en outre un réservoir d'eau (28) disposé à l'intérieur du premier canal d'air (22), lequel sert à sécher préalablement l'air frais conduit vers le premier évaporateur (20a).
